# EUROPEAN PATENT APPLICATION

(11) **EP 4 632 473 A1**
(43) Date of publication of application: **15.10.2025**
(21) Application number: 24777540.6
(22) Date of filing: 07.02.2024
(51) Int. Cl.: G02F 1/1335, G02F 1/137

(54) **SPATIAL LIGHT MODULATOR**

(30) Priority: 24.03.2023 CN 202310336198
(71) Applicant: Huawei Technologies Co., Ltd., Shenzhen, Guangdong 518129 (CN); Peng Cheng Laboratory, Shenzhen, Guangdong 518000 (CN)
(72) Inventor: LI, Shiqiang, Shenzhen, Guangdong 518129 (CN); LU, Lizhen, Shenzhen, Guangdong 518129 (CN); LI, Tenghao, Shenzhen, Guangdong 518129 (CN); CHEN, Quan, Shenzhen, Guangdong 518129 (CN)
(74) Representative: Thun, Clemens
(86) International application number: PCT/CN2024/076578
(87) International publication number: WO 2024/198746

(57) **Abstract**

A spatial light modulator is provided, which may be used in the field of electro-optic modulator technologies, and sequentially includes a conducting layer (101), a phase change material layer (102), a first dielectric layer (103) including a micro-nano structure (106), a pixel layer (104), and a circuit control layer (105) in a first direction. The conducting layer (101) is configured to regulate a to-be-modulated electromagnetic wave, the phase change material layer (102) is configured to perform reversible transformation between different phase states, the first dielectric layer (103) is configured to isolate the pixel layer (104) from the phase change material layer (102), the micro-nano structure (106) is configured to reflect the to-be-modulated electromagnetic wave, each pixel in the pixel layer (104) is configured to independently control an optical property of an electromagnetic wave interacting with the pixel, and the circuit control layer (105) is configured to independently control each pixel. The first dielectric layer (103) that does not absorb or slightly absorbs the to-be-modulated electromagnetic wave can well isolate the pixel layer (104) from the phase change material layer (102). Because the micro-nano structure (106) has a high refractive index, a reflection capability for the to-be-modulated electromagnetic wave can be improved, and a light reflection capability is fundamentally decoupled from a separate control capability of the pixel layer (104), thereby improving design freedom of the pixel layer (104).

## Description

This application claims priority to Chinese Patent Application No. 202310336198.X, filed with the China National Intellectual Property Administration on March 24, 2023 and entitled "SPATIAL LIGHT MODULATOR", which is incorporated herein by reference in its entirety.

### TECHNICAL FIELD

This application relates to the field of electro-optic modulator technologies, and in particular, to a spatial light modulator.

### BACKGROUND

A spatial light modulator (spatial light modulator, SLM) is a type of device that can load information on a one-dimensional or two-dimensional optical data field, to effectively utilize an inherent speed, parallelism, and an interconnection capability of light. Under the control of an electrical drive signal or another signal that changes with time, such device can change an amplitude, a phase, a wavelength, and a polarization state of light distribution in space, or convert incoherent light into coherent light. The SLM mainly includes a plurality of independent elements (that is, pixels). These elements are distributed into a one-dimensional or two-dimensional array in space. Each element can be independently controlled by an optical signal or an electrical signal, and change an optical property of the element based on a modulation signal, so as to modulate a light wave irradiated on the element.

A phase amount that can be adjusted for each pixel of the SLM is determined by phi=d*ΔN*m/λ, where phi is a phase in a unit of radian, d is a thickness of a phase change material layer in the SLM, ΔN is a birefringence exponential difference of a phase change material (such as a liquid crystal) at an operating wavelength λ, and m is a quantity of times that a modulated electromagnetic wave is propagated in the phase change material. To implement a function of all-phase modulation, a value of phi needs to be greater than 2pi. This limitation leads to a result that in a case of a same phase change material, d needs to be greater than dₘᵢₙ for achieving phi=2pi. A direct result of this is that electrical and optical crosstalk between pixels becomes more severe as a pixel pitch p decreases. Experience shows that when d/p>1, a gain of reducing the pixel is low. To resolve a crosstalk problem of small pixels and improve spatial light modulation performance, a nano-antenna may generate a stronger phase modulation capability by using a modulation medium. In a case of implementing a same modulation amount, the thickness of the phase change material layer can be further reduced, so that possible crosstalk between pixels is reduced, and a pitch p between pixels that need to implement same crosstalk performance can also be reduced, thereby implementing an all-phase modulation capability of smaller pixels. In such an SLM, the nano-antenna is implemented by adding a micro-nano structure to the phase change material layer.

However, the phase change material layer is a modulation layer that can be controlled by an excitation source. Adding the micro-nano structure to the phase change material layer causes disturbance to the phase change material layer, and causes alignment uncertainty, thereby causing a performance loss. To ensure good performance, a design of a device needs to be limited, and therefore a type of a micro-nano structure that can be used is limited. Consequently, performance and functions that can be implemented are also limited.

### SUMMARY

This application provides a spatial light modulator. A micro-nano structure is deployed in a first dielectric layer that does not absorb or slightly absorbs a to-be-modulated electromagnetic wave (that is, an absorption amount for the to-be-modulated electromagnetic wave is less than a first threshold), so that the first dielectric layer can isolate a pixel layer from a phase change material layer. In addition, because the micro-nano structure has a high refractive index (that is, the refractive index is greater than a second threshold), high reflection for the to-be-modulated electromagnetic wave can be implemented, and a light reflection capability is fundamentally decoupled from a separate control capability of the pixel layer, thereby improving design freedom of the pixel layer. In addition, because the micro-nano structure is disposed in the first dielectric layer, the micro-nano structure does not cause disturbance to the phase change material layer. Therefore, a type of the micro-nano structure does not need to be limited.

Based on this, embodiments of this application provide the following technical solutions.

According to a first aspect, an embodiment of this application first provides an SLM, which may be used in the field of electro-optic modulator technologies. The SLM sequentially includes a conducting layer, a phase change material layer, a first dielectric layer, a pixel layer, and a circuit control layer in a first direction, where the first dielectric layer includes a micro-nano structure. The conducting layer is configured to modulate a phase or an amplitude of a to-be-modulated electromagnetic wave. The phase change material layer may also be referred to as a phase change layer, a modulation layer, and the like, and is configured to perform reversible transformation between different phase states. An absorption amount of the first dielectric layer for the to-be-modulated electromagnetic wave is less than a first threshold, and a specific value of the first threshold may be customized based on an actual application. The first dielectric layer is a layer of dielectric that does not generate absorption or generates very little absorption for the to-be-modulated electromagnetic wave, and is configured to isolate the pixel layer from the phase change material layer. The micro-nano structure is a dielectric layer or a metal layer having a patterned structure, does not generate absorption or generates very little absorption for the to-be-modulated electromagnetic wave, has a high refractive index, and is configured to reflect the to-be-modulated electromagnetic wave. Therefore, the refractive index of the micro-nano structure is limited to being greater than a second threshold. A specific value of the second threshold may be customized based on an actual application. The pixel layer includes a plurality of pixels, and each pixel is configured to independently control an optical property of an electromagnetic wave interacting with the pixel, for example, may independently control a phase, an amplitude, polarization, or another optical property of the electromagnetic wave (for example, an electromagnetic wave like light, a microwave, or a THz wave) interacting with the pixel. The circuit control layer may also be referred to as a bottom circuit control layer, a control system, or the like, and is configured to independently control each pixel, that is, the circuit control layer may independently control one or more pixels.

In the foregoing implementation of this application, the micro-nano structure is deployed in the first dielectric layer that does not absorb or slightly absorbs the to-be-modulated electromagnetic wave (that is, the absorption amount for the to-be-modulated electromagnetic wave is less than the first threshold), so that the first dielectric layer can isolate the pixel layer from the phase change material layer. In addition, because the micro-nano structure has a high refractive index (that is, the refractive index is greater than the second threshold), high reflection for the to-be-modulated electromagnetic wave can be implemented, and a light reflection capability is fundamentally decoupled from a separate control capability of the pixel layer, thereby improving design freedom of the pixel layer. In addition, because the micro-nano structure is disposed in the first dielectric layer, the micro-nano structure does not cause disturbance to the phase change material layer. Therefore, a type of the micro-nano structure does not need to be limited.

In a possible implementation of the first aspect, the micro-nano structure is completely located inside the first dielectric layer.

In the foregoing implementation of this application, that the micro-nano structure is completely located inside the first dielectric layer is a device structure of the SLM in an application scenario, and is intended to better shield the upper phase change material layer, but enable the micro-nano structure to reflect more to-be-modulated electromagnetic waves.

In a possible implementation of the first aspect, a part of the micro-nano structure may be located inside the first dielectric layer, and an upper surface of the micro-nano structure is a first height higher than an upper surface of the first dielectric layer.

In the foregoing implementation of this application, that a part of the micro-nano structure is located inside the first dielectric layer is a device structure of the SLM in another application scenario. In the application scenario of such a device structure, the upper phase change material layer does not need to be shielded, thereby broadening the application scenario.

In a possible implementation of the first aspect, the first height is less than 1/n of a thickness of the micro-nano structure, n≥2, and the thickness of the micro-nano structure is a distance between the upper surface of the micro-nano structure and a lower surface of the micro-nano structure.

In the foregoing implementation of this application, a part that is of the micro-nano structure and that is higher than the first dielectric layer needs to be at least less than 1/n of the thickness of the micro-nano structure. In this way, most of the micro-nano structure is surrounded by the first dielectric layer, and an uneven area caused by the micro-nano structure and the first dielectric layer is further filled with another layer above the micro-nano structure, so that there is an even surface finally.

In a possible implementation of the first aspect, the thickness of the micro-nano structure (that is, the distance between the upper surface of the micro-nano structure and the lower surface of the micro-nano structure) needs to be less than 1/m of a wavelength of the to-be-modulated electromagnetic wave, where m≥2.

In the foregoing implementation of this application, a size of the micro-nano structure is limited to a sub-wavelength scale, so that there is no diffraction effect within a wavelength range of the to-be-modulated electromagnetic wave.

In a possible implementation of the first aspect, a refractive index difference between the first dielectric layer and the micro-nano structure within the wavelength range of the to-be-modulated electromagnetic wave should be greater than 1.

In the foregoing implementation of this application, the refractive index difference between the first dielectric layer and the micro-nano structure is greater than 1, so that the first dielectric layer can better isolate the phase change material layer from the pixel layer, and reflection efficiency of the micro-nano structure for the to-be-modulated electromagnetic wave can be improved.

In a possible implementation of the first aspect, a size of the micro-nano structure belongs to a sub-wavelength scale, and the micro-nano structure includes at least any one of the following: a one-dimensional periodic structure and a two-dimensional grid structure, where the grid structure is periodically distributed along each dimension.

In the foregoing implementation of this application, there may be a plurality of types of micro-nano structures, thereby improving a degree of freedom of design of the micro-nano structure.

In a possible implementation of the first aspect, when the micro-nano structure is the one-dimensional periodic structure, a period of the periodic structure is less than the wavelength of the to-be-modulated electromagnetic wave.

In the foregoing implementation of this application, the period of the micro-nano structure needs to be less than the wavelength of the to-be-modulated electromagnetic wave. Such a limitation is intended to improve a reflection capability of the micro-nano structure for the to-be-modulated electromagnetic wave, and achieve an effect of decoupling the to-be-modulated electromagnetic wave from the lower pixel layer, so that design of the pixel layer can be more diversified.

In a possible implementation of the first aspect, when the micro-nano structure is the two-dimensional grid structure, a period of the grid structure along each dimension is less than the wavelength of the to-be-modulated electromagnetic wave.

In the foregoing implementation of this application, such a limitation is also intended to improve a reflection capability of the micro-nano structure for the to-be-modulated electromagnetic wave, and achieve an effect of decoupling the to-be-modulated electromagnetic wave from the lower pixel layer, so that design of the pixel layer can be more diversified.

In a possible implementation of the first aspect, the conducting layer may include only an electrode layer, and the electrode layer is configured to cooperate with the circuit control layer to apply an electrical signal to the SLM, to implement modulation on the phase or the amplitude of the to-be-modulated electromagnetic wave.

In the foregoing implementation of this application, the conducting layer may be merely the electrode layer, and a process is simple.

In a possible implementation of the first aspect, an upper surface of the electrode layer may further include a dielectric reflection layer, and the dielectric reflection layer includes k layers of dielectric films, and is configured to modulate the phase or the amplitude of the to-be-modulated electromagnetic wave, where k≥1.

In the foregoing implementation of this application, the dielectric reflection layer is used together with the first dielectric layer and the micro-nano structure, so that a horizontal size of a pixel can be further reduced, and performance does not deteriorate due to a small pixel size. Therefore, an SLM with a smaller pixel can be implemented, without causing a high performance loss.

In a possible implementation of the first aspect, a thickness of each of the k layers of dielectric films is less than the wavelength of the to-be-modulated electromagnetic wave.

In the foregoing implementation of this application, such a limitation is intended to better implement modulation on the phase or the amplitude of the to-be-modulated electromagnetic wave.

In a possible implementation of the first aspect, when k≥2, values of refractive indices of adjacent dielectric films in the k layers of dielectric films are different.

In the foregoing implementation of this application, such a limitation is intended to increase a modulation range of the phase or the amplitude of the to-be-modulated electromagnetic wave.

In a possible implementation of the first aspect, the SLM further includes a functional layer; and the functional layer is located on an upper surface and/or a lower surface of the phase change material layer, and is configured to regulate alignment of the phase change material layer. In a liquid crystal device, the functional layer may be an optical alignment layer, an organic alignment layer, or an inorganic alignment layer.

In the foregoing implementation of this application, the added functional layer is configured to regulate a phase change material, so as to implement an alignment function.

In a possible implementation of the first aspect, when the functional layer is located on the lower surface of the phase change material layer and the micro-nano structure is completely located inside the first dielectric layer, a sum of a thickness of the functional layer and a first distance of the micro-nano structure is greater than 1/q of the wavelength of the to-be-modulated electromagnetic wave, where the thickness of the functional layer is a distance between an upper surface of the functional layer and a lower surface of the functional layer, the first distance is a distance between the upper surface of the micro-nano structure and the upper surface of the first dielectric layer, and q≥10.

In the foregoing implementation of this application, such a limitation is intended to shield functions of the lower first dielectric layer and micro-nano structure from impact of the upper phase change material layer during modulation.

In a possible implementation of the first aspect, when the functional layer is located on the upper surface of the phase change material layer, the SLM further includes a second dielectric layer, where the second dielectric layer includes the micro-nano structure; and the second dielectric layer is located between the functional layer and the conducting layer, and is configured to isolate the functional layer from the conducting layer.

In the foregoing implementation of this application, the second dielectric layer is located between the functional layer and the conducting layer, to increase an amplitude and/or a phase of a modulated electromagnetic wave.

In a possible implementation of the first aspect, the phase change material layer may be a liquid crystal layer, and a phase of an incident light beam is modulated by using birefringence of liquid crystal molecules. The phase change material layer may alternatively be another electro-optic modulation material. A type of the phase change material layer is not specifically limited in this application.

In the foregoing implementation of this application, a typical form of the phase change material layer is specifically described, and is widely applicable.

In a possible implementation of the first aspect, the upper surface of the conducting layer may be further covered with a substrate (which may also be referred to as a device cover), for example, glass, which is used for device packaging.

In the foregoing implementation of this application, the SLM may be further packaged by using the substrate, to facilitate application.

### BRIEF DESCRIPTION OF DRAWINGS

FIG. 1 is a diagram of a structure of an SLM according to an embodiment of this application;
FIG. 2 is a diagram of another structure of an SLM according to an embodiment of this application;
FIG. 3 is a diagram of another structure of an SLM according to an embodiment of this application;
FIG. 4 is a diagram of another structure of an SLM according to an embodiment of this application;
FIG. 5 is a diagram of a cross-sectional structure of a first dielectric layer including a micro-nano structure according to an embodiment of this application;
FIG. 6 is a diagram of a top-view structure of a first dielectric layer including a micro-nano structure according to an embodiment of this application;
FIG. 7 is a diagram of another top-view structure of a first dielectric layer including a micro-nano structure according to an embodiment of this application;
FIG. 8 is a diagram of another top-view structure of a first dielectric layer including a micro-nano structure according to an embodiment of this application;
FIG. 9 is a diagram of another top-view structure of a first dielectric layer including a micro-nano structure according to an embodiment of this application;
FIG. 10 is a diagram of another top-view structure of a first dielectric layer including a micro-nano structure according to an embodiment of this application;
FIG. 11 is a diagram of a top-view structure in a case that a micro-nano structure is completely located inside a first dielectric layer and the micro-nano structure is a two-dimensional grid structure according to an embodiment of this application;
FIG. 12 is a diagram of another structure of an SLM in which a part of a micro-nano structure is located inside a first dielectric layer according to an embodiment of this application;
FIG. 13 is a diagram of another cross-sectional structure of a first dielectric layer including a micro-nano structure according to an embodiment of this application;
FIG. 14(a) to FIG. 14(c) are a diagram of another structure of an SLM according to an embodiment of this application; and
FIG. 15 is a diagram of another structure of an SLM according to an embodiment of this application.

### DESCRIPTION OF EMBODIMENTS

This application provides a spatial light modulator. A micro-nano structure is deployed in a first dielectric layer that does not absorb or slightly absorbs a to-be-modulated electromagnetic wave (that is, an absorption amount for the to-be-modulated electromagnetic wave is less than a first threshold), so that the first dielectric layer can isolate a pixel layer from a phase change material layer. In addition, because the micro-nano structure has a high refractive index (that is, the refractive index is greater than a second threshold), high reflection for the to-be-modulated electromagnetic wave can be implemented, and a light reflection capability is fundamentally decoupled from a separate control capability of the pixel layer, thereby improving design freedom of the pixel layer. In addition, because the micro-nano structure is disposed in the first dielectric layer, the micro-nano structure does not cause disturbance to the phase change material layer. Therefore, a type of the micro-nano structure does not need to be limited.

It should be understood that, "up", "down", and the like used in this application are merely used for distinguishing, and cannot be understood as an indication or implication of relative importance or an indication or implication of a sequence. In addition, for brevity and clarity, reference numbers and/or letters are repeated in a plurality of accompanying drawings of this application. Repetition is not indicative of a strict limiting relationship between various embodiments and/or configurations. In addition, in the specification, claims, and accompanying drawings of this application, terms "first", "second", and the like are intended to distinguish between similar objects but do not necessarily indicate a specific order or sequence. It should be understood that the terms used in such a way are interchangeable in proper circumstances. This is merely a discrimination manner that is used when objects having a same attribute are described in embodiments of this application. In addition, the terms "include", "have", and any variants thereof are intended to cover non-exclusive inclusion, so that a process, method, system, product, or device including a series of units is not necessarily limited to those units, but may include other units that are not clearly listed or are inherent to the process, method, product, or device.

An SLM is a miniature display including pixel bars or points arranged in one or two dimensions. Each pixel can independently control a phase, an amplitude, polarization, or another optical property of an electromagnetic wave (such as light, a microwave, or a THz wave) interacting with the pixel. An amplitude-type SLM is the most commonly used, and is widely used in miniature image generators, and portable devices of augmented reality (augmented reality, AR) and virtual reality (virtual reality, VR). Applications of a phase-type SLM include a liquid crystal antenna, adaptive optics, holographic display and radar, a lidar, a wavelength selective switch (wavelength selective switch, WSS), and the like. To improve modulation performance of the SLM, a pitch between pixels is designed to be smaller. However, electrical and optical crosstalk between pixels becomes severe as the pixel pitch decreases. This affects design freedom of a pixel layer in the SLM.

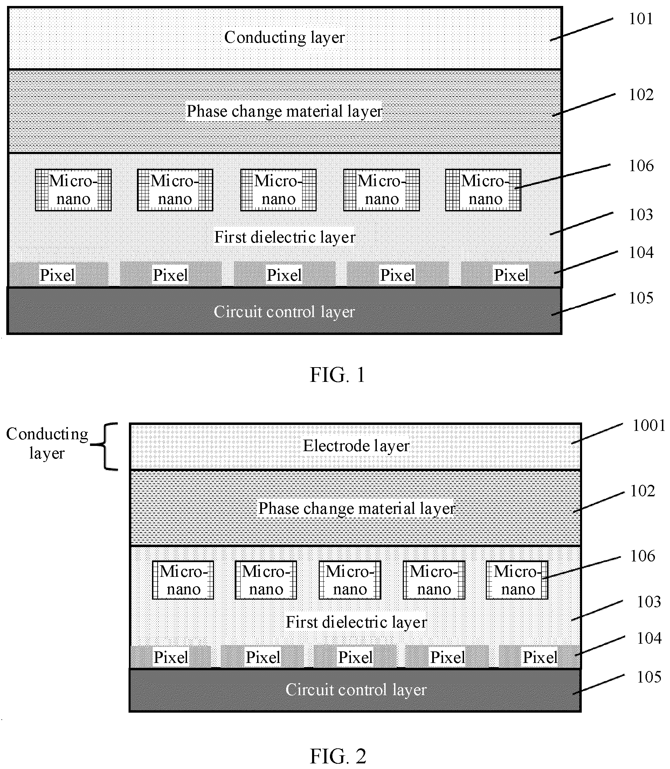

Therefore, this application provides an SLM. FIG. 1 is a diagram of a structure of an SLM according to an embodiment of this application. As shown in FIG. 1, a conducting layer 101, a phase change material layer 102, a first dielectric layer 103, a pixel layer 104, and a circuit control layer 105 are sequentially included in a direction (that is, a first direction). The first dielectric layer 103 includes a patterned micro-nano structure (micro-nano for short in FIG. 1) 106. The following describes the layers in sequence.

### 1. Conducting layer 101

The conducting layer 101 is configured to modulate a phase or an amplitude of a to-be-modulated electromagnetic wave.

Specifically, in some implementations of this application, the conducting layer 101 may include only an electrode layer. Specifically, refer to FIG. 2. FIG. 2 is a diagram of another structure of an SLM according to an embodiment of this application. An electrode layer 1001 is a specific implementation form of the conducting layer 101. The electrode layer 1001 is configured to cooperate with the circuit control layer 105 to apply an electrical signal to the SLM, to modulate the phase or the amplitude of the to-be-modulated electromagnetic wave. The electrode layer 1001 has both transparency and conductivity for the to-be-modulated electromagnetic wave, and therefore may also be referred to as a conducting transparent layer. For example, the electrode layer 1001 may be indium tin oxide (indium tin oxide, ITO), or may be another transparent conducting material. This is not limited in this application.

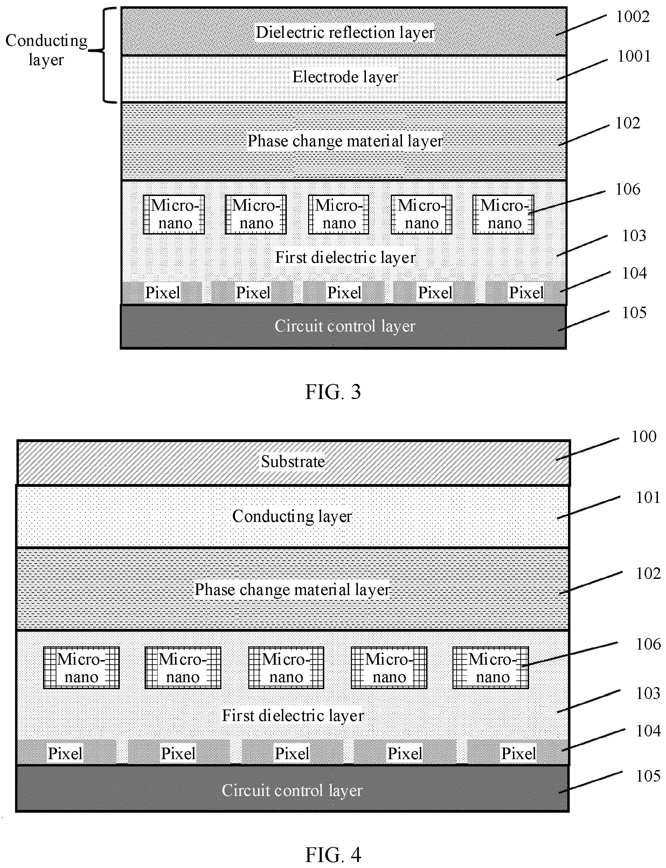

It should be noted that, in some other implementations of this application, in addition to the electrode layer 1001, the conducting layer 101 may further include a dielectric reflection layer (also referred to as a dielectric reflection control layer). The dielectric reflection layer may be an additional film layer, for example, a communication band 1550 nm. This layer may be formed by silicon. The dielectric reflection layer may alternatively be a dielectric layer including a micro-nano structure. However, parameters such as a refractive index of the dielectric layer and a refractive index of the micro-nano structure are different from parameters such as a refractive index of the first dielectric layer 103 and a refractive index of the micro-nano structure 106. Other parameters are similar. For details, refer to the following descriptions of the first dielectric layer 103 and the micro-nano structure 106. Details are not described herein again. A specific type of the dielectric reflection layer is not limited in this application. Specifically, refer to FIG. 3. FIG. 3 is a diagram of another structure of an SLM according to an embodiment of this application. A dielectric reflection layer 1002 is located on an upper surface of the electrode layer 1001, and is configured to modulate the phase or the amplitude of the to-be-modulated electromagnetic wave, to form a cavity. The dielectric reflection layer 1002 is a dielectric layer that has a low scattering and a low absorption loss and that has a different refractive index in the to-be-modulated electromagnetic wave spectrum segment with the cover plate (such as glass) and the electrode layer 1001 of the SLM. The dielectric reflection layer 1002 includes k (k≥1) layers of dielectric films, that is, the dielectric reflection layer 1002 includes at least one layer of dielectric film.

It should be further noted that, in some implementations of this application, a thickness t of each of the k layers of dielectric films needs to satisfy t<λ, where λ is a wavelength of the to-be-modulated electromagnetic wave, that is, an operating wavelength of the SLM. The purpose is to better implement modulation on the phase or the amplitude of the to-be-modulated electromagnetic wave.

It should be further noted that, in some other implementations of this application, if the dielectric reflection layer 1002 includes at least two layers of dielectric films (that is, k≥2), values of refractive indices of two adjacent layers of dielectric films need to be different, to increase a modulation range of the phase or the amplitude of the to-be-modulated electromagnetic wave.

It should be noted that, in embodiments of this application, a specific type of the dielectric reflection layer 1002 is not limited in this application. Therefore, a thickness of the phase change material layer 102 may be reduced during use of the dielectric reflection layer 1002 that may be selected and may be changed in a plurality of manners. In this way, high phase modulation can be implemented with respect to a thickness that is far less than that of a conventional SLM. That is, when the thickness of the phase change material layer 102 is d, the thickness of the phase change material layer in the conventional SLM needs to be greater than 3d/2. However, because there is the dielectric reflection layer 1002 in this application, a same phase modulation amount phi can be achieved. In addition, the dielectric reflection layer 1002 is used together with the first dielectric layer 103 and the micro-nano structure 106, so that a horizontal size of a pixel can be further reduced. For example, currently, a 2.7-micron reflective SLM basically reaches a limit. In the decoupling manner in this application, performance is not reduced due to a small pixel size. Therefore, an SLM with a smaller pixel can be implemented, and no high performance loss is caused.

It should be further noted that, in embodiments of this application, an upper surface of the conducting layer 101 may be further covered with a substrate (which may also be referred to as a device cover), for example, glass, which is used for device packaging. In an example, FIG. 4 shows that the conducting layer 101 is further covered with a substrate 100. It should be noted that FIG. 4 shows the substrate 100 added on the basis of FIG. 1, and FIG. 4 is merely an example. In actual application, the substrate 100 may also be added on the basis of FIG. 2 and FIG. 3, and details are not described herein.

### 2. Phase change material layer 102

The phase change material layer 102 may also be referred to as a phase change layer, a modulation layer, or the like, and is configured to perform reversible transformation between different phase states. For example, the phase change material layer may be a liquid crystal layer, and a phase of an incident light beam is modulated by using birefringence of liquid crystal molecules. Alternatively, the phase change material layer may be another electro-optic modulation material. A type of the phase change material layer is not specifically limited in this application.

### 3. First dielectric layer 103 including the micro-nano structure 106

The first dielectric layer 103 (a refractive index is n₁) is a layer of dielectric that does not generate absorption or generates very little absorption for the to-be-modulated electromagnetic wave. Therefore, in this application, an absorption amount of the first dielectric layer 103 for the to-be-modulated electromagnetic wave is limited to being less than a first threshold. A specific value of the first threshold may be customized based on actual application. The first dielectric layer 103 does not generate absorption or generates very little absorption for the to-be-modulated electromagnetic wave, and therefore is configured to isolate the pixel layer 104 from the phase change material layer 102.

It should be noted that, in embodiments of this application, the first dielectric layer 103 further includes the micro-nano structure 106 (a refractive index is n₂). The micro-nano structure 106 is a dielectric layer or a metal layer having a patterned structure, does not generate absorption or generates very little absorption for the to-be-modulated electromagnetic wave, and has a high refractive index. Therefore, the refractive index of the micro-nano structure is limited to being greater than a second threshold in this application. A specific value of the second threshold may be customized based on actual application.

In addition, in some implementations of this application, during actual implementation, there is an obvious difference between direct optical properties of the first dielectric layer 103 and the micro-nano structure 106: Within a wavelength range of the to-be-modulated electromagnetic wave, a difference between the refractive indices of the first dielectric layer 103 and the micro-nano structure 106 should be greater than 1. For example, in a short-wave infrared band, the refractive index of the first dielectric layer 103 is 1.5, and the refractive index of the micro-nano structure 106 is greater than 2.5. However, it should be noted that, in some implementations, the refractive index of the micro-nano structure 106 may be far greater than the refractive index of the first dielectric layer 103. For example, the refractive index of the micro-nano structure 106 is 3.5, and the refractive index of the first dielectric layer 103 is 1.5.

It should be further noted that, in embodiments of this application, because the micro-nano structure 106 is disposed in the first dielectric layer 103, in different application scenarios, locations at which the micro-nano structure 106 is deployed in the first dielectric layer 103 may be slightly different. For ease of understanding, the following examples are used for illustration.
A. The micro-nano structure 106 is completely located inside the first dielectric layer 103.

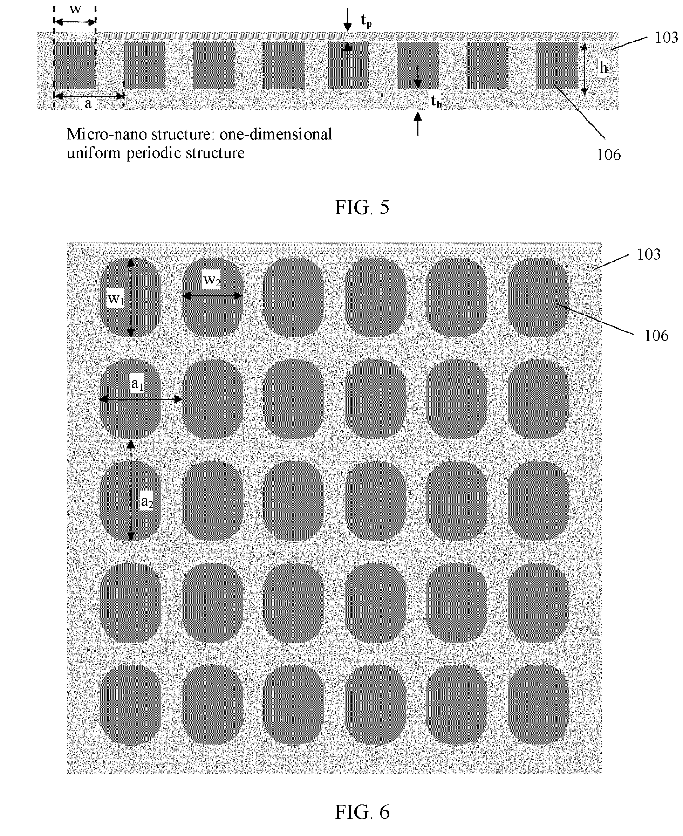

In a possible implementation, the micro-nano structure 106 is completely located inside the first dielectric layer 103. Specifically, refer to FIG. 5. FIG. 5 is a cross-sectional view of a structure of a first dielectric layer including a micro-nano structure according to an embodiment of this application. Specifically, FIG. 5 corresponds to a cross-sectional view of a structure in a scenario in which the micro-nano structure 106 is a one-dimensional uniform periodic structure. In this embodiment of this application, a distance between an upper surface of the micro-nano structure 106 and an upper surface of the first dielectric layer 103 is a first distance tₚ, a distance between a lower surface of the micro-nano structure 106 and a lower surface of the first dielectric layer 103 is a second distance t_{b}, and a thickness h of the micro-nano structure 106 (that is, a distance between the upper surface of the micro-nano structure 106 and the lower surface of the micro-nano structure 106) needs to be less than 1/m (m≥2) of the wavelength of the to-be-modulated electromagnetic wave, that is, h<λ/m. For example, when m=2, h<λ/2*.* A size of the micro-nano structure 106 is limited to a sub-wavelength scale, so that there is no diffraction effect within the wavelength range of the to-be-modulated electromagnetic wave.

It should be noted that, in this embodiment of this application, in addition to the size belonging to the sub-wavelength scale, a structure type of the micro-nano structure may also be diversified, including but not limited to the following.
a. The micro-nano structure 106 includes a one-dimensional uniform periodic structure.

In a possible implementation, the micro-nano structure 106 may include the one-dimensional uniform periodic structure. FIG. 5 is a cross-sectional view of a structure that the micro-nano structure 106 is completely located inside the first dielectric layer 103 and the micro-nano structure 106 is the one-dimensional uniform periodic structure, where w is a line width of a material of the micro-nano structure, a is a period of the uniform structure, and h is the thickness of the micro-nano structure 106. The micro-nano structure 106 is surrounded by a filling medium (that is, the first dielectric layer 103) with a low refractive index. The filling medium may include but is not limited to a dielectric material, an optical glue, or a material such as Al₂O₃, SiO₂, polymethyl methacrylate (polymethyl methacrylate, PMMA), SU-8, or polydimethylsiloxane (polydimethylsiloxane, PDMS).

It should be noted that, in some implementations of this application, the period a of the micro-nano structure 106 also needs to be less than the wavelength λ of the to-be-modulated electromagnetic wave, that is, a<λ. Such a limitation is intended to improve a reflection capability of the micro-nano structure 106 for the to-be-modulated electromagnetic wave, and achieve an effect of decoupling the to-be-modulated electromagnetic wave from the lower pixel layer 104, so that design of the pixel layer 104 can be more diversified.

It should be further noted that, as a modulation layer that can be controlled by an excitation source, the phase change material layer requires specific material quality. For example, principal axes of anisotropic refractive indices of a liquid crystal need to have consistent directions. Such alignment is determined by quality of a contact interface between the phase change material layer and the dielectric layer below the phase change material layer. Unflatness of the contact interface also affects quality, and consequently affects alignment of the liquid crystal. Therefore, if the micro-nano structure is added to the phase change material layer, the micro-nano structure causes disturbance to the phase change material layer, causing uncertainty of the alignment, thereby causing a performance loss. Therefore, the manner of adding the micro-nano structure to the phase change material layer limits a type of a micro-nano structure that can be used, and consequently, performance and functions that can be implemented are limited. However, in this application, because the micro-nano structure is deployed at the first dielectric layer, a type of the micro-nano structure may not be limited. For ease of understanding, the specific structure of the micro-nano structure 106 that is the one-dimensional periodic structure is described by using several specific examples, including but not limited to the following.

(1) In an example, specifically, refer to FIG. 6. FIG. 6 is a schematic top view of a structure of a first dielectric layer including a micro-nano structure according to an embodiment of this application. Specifically, FIG. 6 corresponds to a schematic top view of a structure in a scenario in which the micro-nano structure 106 is a one-dimensional uniform periodic structure. FIG. 6 shows a specific structure of the formed micro-nano structure. Each small micro-nano structure has a patterned structure. FIG. 6 shows an elliptical patterned structure, structure periods of the micro-nano structure are a₁ and a₂, and line widths of the micro-nano structure are w₁ and w₂. In this embodiment of this application, a₁ and a₂ may be different or may be the same. Similarly, w₁ and w₂ may be different or may be the same. This is specifically not limited in this application. FIG. 6 shows a case in which a₁≠a₂ and w₁≠w₂. Such a limitation is intended to separately modulate optical properties of the SLM in two different directions, which is a better modulation manner.

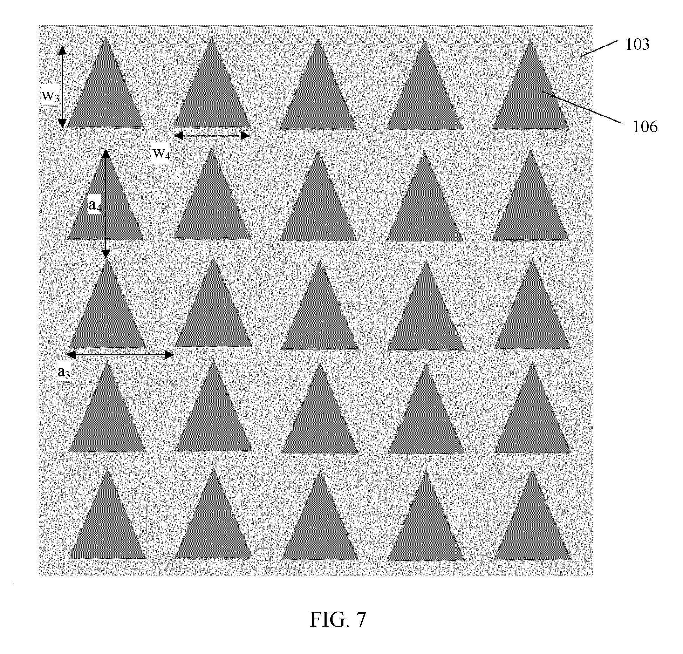

(2) In another example, FIG. 7 shows a specific structure of another group of micro-nano structures 106 that can be used. Similarly, each small micro-nano structure has a patterned structure. FIG. 7 shows a triangular patterned structure, structure periods of the micro-nano structure are a₃ and a₄, and line widths of the micro-nano structure are w₃ and w₄. In this embodiment of this application, a₃ and a₄ may be different or may be the same. Similarly, w₃ and w₄ may be different or may be the same. This is specifically not limited in this application. FIG. 7 shows a case in which a₃≠a₄ and w₃≠w₄. Such a limitation is intended to separately modulate optical properties of the SLM in two different directions, which is a better modulation manner.

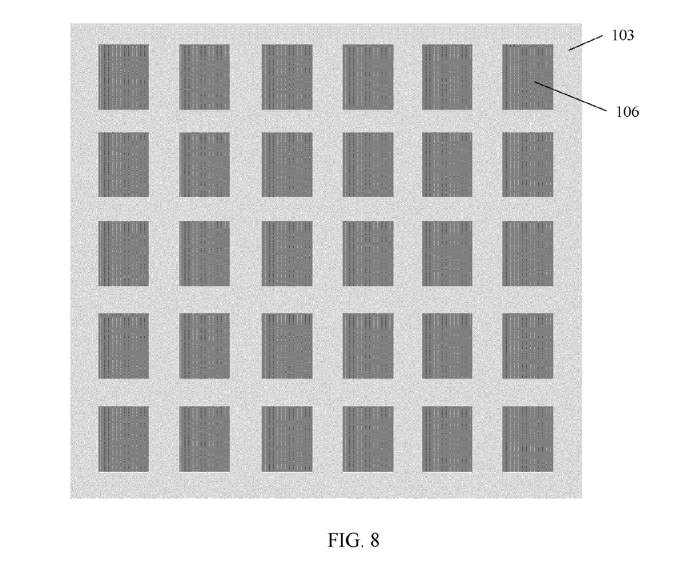

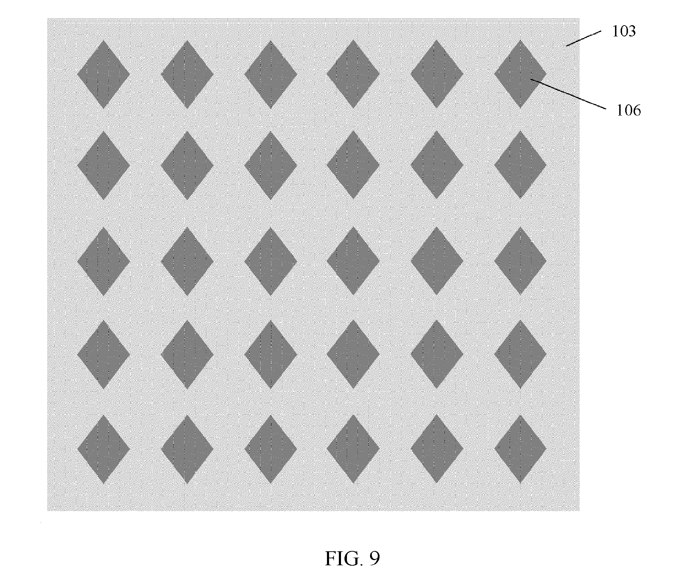

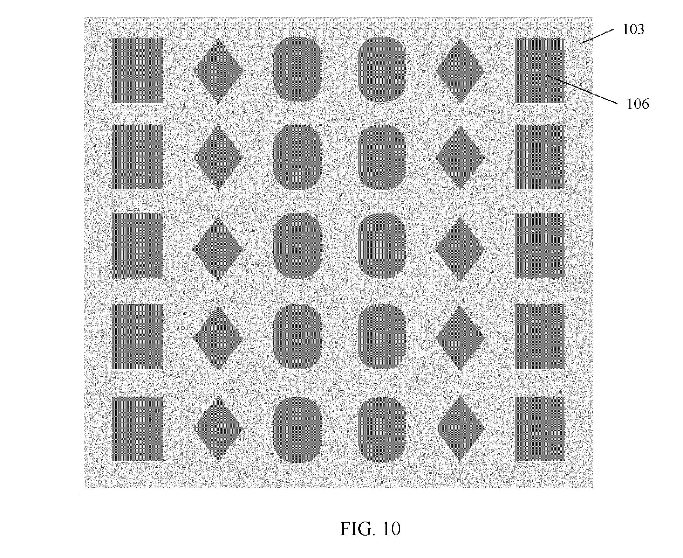

It should be noted that FIG. 6 and FIG. 7 show merely two specific structures of the micro-nano structure 106. In actual application, the structure of the micro-nano structure 106 may be customized based on a requirement, for example, may be a rectangle shown in FIG. 8, may be a diamond shown in FIG. 9, or may be a combination of a plurality of different shapes shown in FIG. 10. This is not specifically limited in this application. Preferably, the micro-nano structure 106 may have mirror symmetry in a direction of a₁/a₃, and does not need to have symmetry in another direction of a₂/a₄.

b. The micro-nano structure 106 includes a two-dimensional grid structure, and the grid structure is periodically distributed along each dimension.

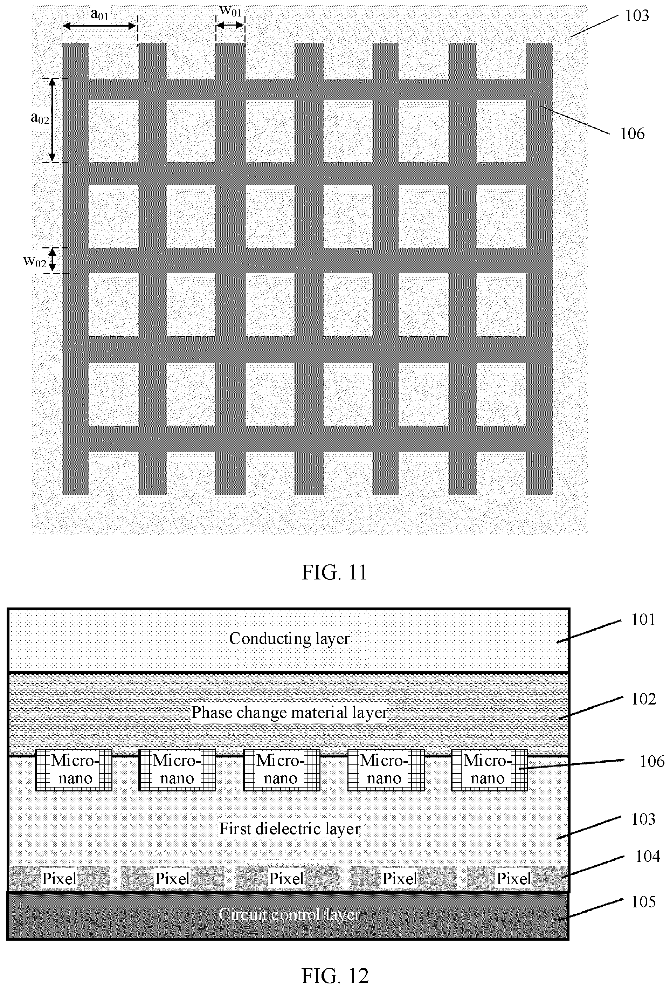

In a possible implementation, the micro-nano structure 106 may alternatively include the two-dimensional grid structure. FIG. 11 is a schematic top view of a structure that the micro-nano structure 106 is completely located inside the first dielectric layer 103 and the micro-nano structure 106 is the two-dimensional grid structure, where periods in two directions are respectively a₀₁ and a₀₂, line widths of a micro-nano structure material are respectively w₀₁ and w₀₂, and a thickness of the micro-nano structure 106 is h (h is not shown because FIG. 11 is a top view). The micro-nano structure 106 is surrounded by a filling medium (that is, the first dielectric layer 103) with a low refractive index. The filling medium may include but is not limited to a dielectric material, an optical glue, or a material such as Al₂O₃, SiO₂, PMMA, SU-8, or PDMS.

Similarly, in some implementations of this application, the periods a₀₁ and a₀₂ of the micro-nano structure 106 in the two directions also need to be less than the wavelength λ of the to-be-modulated electromagnetic wave, that is, a₀₁<λ and a₀₂<λ. Such a limitation is also intended to improve a reflection capability of the micro-nano structure 106 for the to-be-modulated electromagnetic wave, and achieve an effect of decoupling the to-be-modulated electromagnetic wave from the lower pixel layer 104, so that design of the pixel layer 104 can be more diversified.

It should be noted that FIG. 11 shows merely a specific two-dimensional grid structure of the micro-nano structure 106. In actual application, a type of the two-dimensional grid structure may be customized based on a requirement. This is not specifically limited in this application.

B. A part of the micro-nano structure 106 is located inside the first dielectric layer 103, and an upper surface of the micro-nano structure 106 is a first height tₙ higher than an upper surface of the first dielectric layer 103.

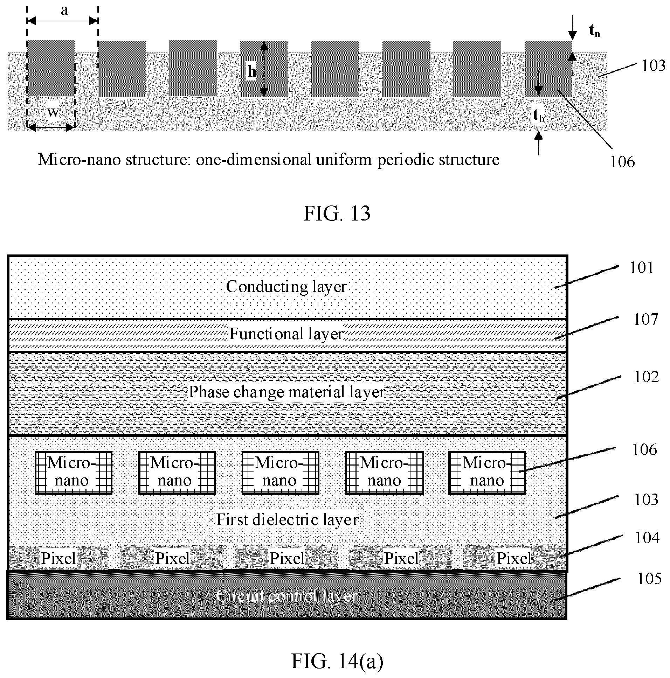

In another possible implementation, the part of the micro-nano structure 106 is located inside the first dielectric layer 103. A characteristic of this device structure is that the upper phase change material layer 102 does not need to be shielded, and the phase change material layer 102 is as close as possible and is not affected. Therefore, the micro-nano structure is in contact with an upper layer (for example, the phase change material layer 102 or the functional layer 107 described subsequently). Specifically, refer to FIG. 12 and FIG. 13. FIG. 12 is another diagram of a structure of an SLM in which a part of a micro-nano structure is located inside a first dielectric layer according to an embodiment of this application. FIG. 12 shows a different location of the micro-nano structure in the first dielectric layer relative to FIG. 1. FIG. 12 is merely an example. In actual application, the location of the micro-nano structure in the first dielectric layer may alternatively be adjusted based on FIG. 2 or FIG. 3. Details are not described herein. FIG. 13 is another cross-sectional view of a structure of a first dielectric layer including a micro-nano structure according to an embodiment of this application. Specifically, FIG. 13 corresponds to a cross-sectional view of a structure in a scenario in which the micro-nano structure 106 is a one-dimensional uniform periodic structure, where w is a line width of a micro-nano structure material, a is a period of the uniform structure, and h is a thickness of the micro-nano structure 106. In this embodiment of this application, the upper surface of the micro-nano structure 106 is the first height tₙ higher than the upper surface of the first dielectric layer 103, and a distance between a lower surface of the micro-nano structure 106 and a lower surface of the first dielectric layer 103 is a second distance t_{b}. Similarly, the thickness h of the micro-nano structure 106 needs to be less than 1/m (m≥2) of the wavelength of the to-be-modulated electromagnetic wave, that is, h<λ/m.

It should be noted that, in this embodiment of this application, in addition to the size belonging to the sub-wavelength scale, a structure type of the micro-nano structure may also be diversified, for example, the foregoing one-dimensional periodic structure or two-dimensional grid structure. For details, refer to the foregoing descriptions. Details are not described herein again.

It should be further noted that, in an implementation of this application, the first height tₙ by which the upper surface of the micro-nano structure 106 is higher than the upper surface of the first dielectric layer 103 needs to be less than 1/n (n≥2) of the thickness of the micro-nano structure 106, that is, 0<tₙ<h/n. For example, when n=2, 0<tₙ<h/2. In this way, most of the micro-nano structure 106 is surrounded by the first dielectric layer 103, and an uneven area caused by the micro-nano structure 106 and the first dielectric layer 103 is further filled with a layer (for example, the phase change material layer 102 or the functional layer 107 described subsequently) above the micro-nano structure 106, so that there is an even surface finally.

In conclusion, in a common SLM design, the lower pixel layer needs to be separated from the phase change material layer by using a non-reflective non-conducting material or a non-conducting material with a low reflection capability. As a result, the pixel layer cannot efficiently reflect the to-be-modulated electromagnetic wave. However, in embodiments of this application, because the micro-nano structure 106 with a sub-wavelength scale and a refractive index is deployed inside the first dielectric layer 103, a capability of almost 100% reflecting an electromagnetic wave can be implemented, and a spectrum band that can be covered in a range of 1550 nm is greater than 100 nm. In addition, the micro-nano structure 106 is not or is slightly affected by the lower pixel layer 104. In this way, the lower pixel layer 104 may also have more choices in design. A light reflection capability is fundamentally decoupled from a separate control capability of a pixel.

### 4. Pixel layer 104

The pixel layer 104 includes a plurality of pixels (as shown in FIG. 1), and each pixel is configured to independently control an optical property of an electromagnetic wave interacting with the pixel, for example, may independently control a phase, an amplitude, polarization, or another optical property of the electromagnetic wave (for example, an electromagnetic wave like light, a microwave, or a THz wave) interacting with the pixel. The pixel layer 104 may be metal, or may be another conducting medium, for example, ITO. A material type of a pixel is not specifically limited in this application, provided that the pixel can reflect a modulated electromagnetic wave.

It should be noted that, in this embodiment of this application, a gap between pixels may be filled with a medium that is the same as that of the first dielectric layer 103 (as shown in FIG. 1 to FIG. 4), or another medium. This is not limited in this application.

### 5. Circuit control layer 105

The circuit control layer 105 may also be referred to as a bottom circuit control layer, a control system, or the like, and is configured to independently control each pixel, that is, the circuit control layer 105 may independently control one or more pixels. In embodiments of this application, the circuit control layer 105 and the electrode layer 1001 are used as a pair of electrodes to apply an electrical signal to the SLM. The circuit control layer 105 may be a complementary metal oxide semiconductor (complementary metal oxide semiconductor), or may be a thin film field-effect transistor (thin film transistor, TFT). This is not limited in this application.

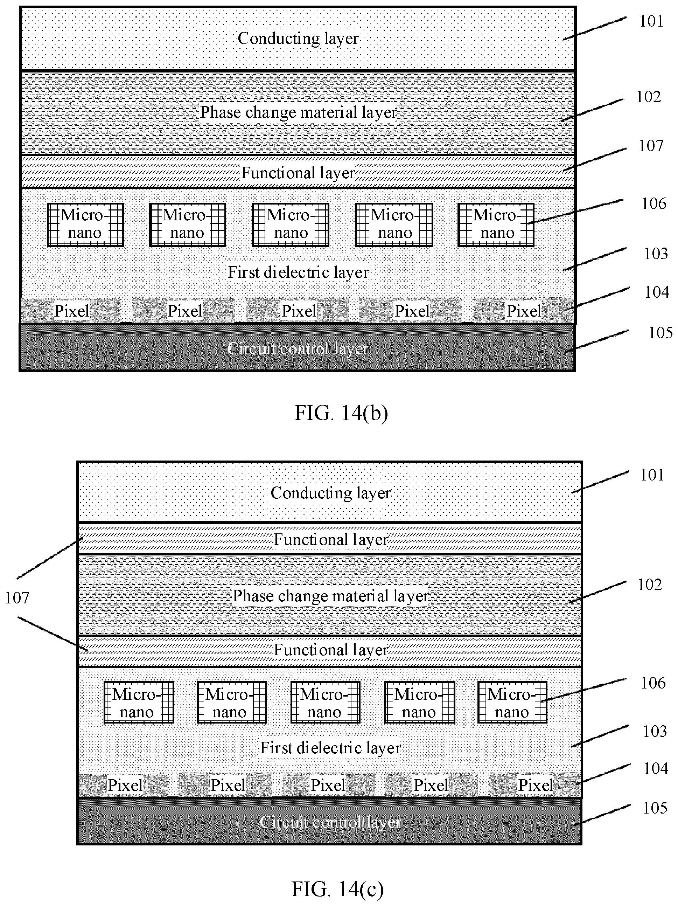

It should be noted that, in some implementations of this application, the SLM may further include a functional layer 107. The functional layer 107 may be located on an upper surface and/or a lower surface of the phase change material layer 102, and is configured to control alignment of the phase change material layer 102. In a liquid crystal device, the functional layer 107 may be an optical alignment layer, an organic alignment layer, or an inorganic alignment layer. Specifically, refer to FIG. 14(a) to FIG. 14(c). FIG. 14(a) to FIG. 14(c) are another diagram of a structure of an SLM according to an embodiment of this application. A sub-diagram FIG. 14(a) is a diagram of a structure that the functional layer is located on the upper surface of the phase change material layer 102, a sub-diagram FIG. 14(b) is a diagram of a structure that the functional layer is located on the lower surface of the phase change material layer 102, and a sub-diagram FIG. 14(c) is a diagram of a structure that the functional layer is located on both the upper surface and the lower surface of the phase change material layer 102. It should be noted that FIG. 14(a) to FIG. 14(c) show the functional layer 107 added based on FIG. 1. FIG. 14(a) to FIG. 14(c) are merely an example. In actual application, the functional layer 107 may alternatively be added based on FIG. 2, FIG. 3, FIG. 4, or FIG. 12. Details are not described herein. In an example, if the phase change material layer 102 is a liquid crystal layer, the functional layer 107 can play a function of alignment, and may be an optical alignment layer, for example, an optical alignment material such as SD1 that can help, by using polarized light, the liquid crystal layer generate arrangement in a corresponding direction. Alternatively, the functional layer 107 may be a micro-trench with a very small scale, an inorganic transparent material with a texture, or a cross-linked high polymer, or may be a PI material that can guide the liquid crystal layer to generate alignment after friction. This is specifically not limited in this application. In addition, if both the upper surface and the lower surface of the phase change material layer 102 have the functional layer 107 (that is, the sub-diagram FIG. 14(c)), a direction of alignment from the functional layer 107 on the upper surface may be the same as or different from a direction of alignment from the functional layer 107 on the lower surface. Whether the alignment is the same depends on a specific application scenario. This is not limited in this application.

It should be noted that, in embodiments of this application, if the functional layer 107 is located on the lower surface of the phase change material layer 102 (that is, the sub-diagrams FIG. 14(b) and FIG. 14(c)), the first dielectric layer 103 including the micro-nano structure 106 and the upper surface of the functional layer 107 located below the phase change material layer 102 are located on a same flat surface, and flatness of the surface (which means flatness of the functional layer 107 if there is the functional layer 107, or means flatness of the phase change material layer 102 if there is no functional layer 107) needs to be less than λ/x. x can be customized, for example, x=20.

It should be further noted that, in embodiments of this application, if the functional layer 107 is located on the lower surface of the phase change material layer 102 and the micro-nano structure 106 is completely located inside the first dielectric layer 103 (as shown in the sub-diagrams FIG. 14(b) and FIG. 14(c)), a corresponding distance is reserved between the upper surface and the lower surface of the micro-nano structure 106 and the pixel layer 104 and the functional layer 107. Assuming that a thickness of the functional layer is t₁₀₇ (that is, a distance between the upper surface of the functional layer 107 and the lower surface of the functional layer 107), and a first distance between the upper surface of the micro-nano structure 106 and the upper surface of the first dielectric layer 103 is tₚ, (t₁₀₇+tₚ)>λ/q. Such a limitation is intended to shield functions of the lower first dielectric layer 103 and micro-nano structure 106 from impact of the upper phase change material layer 102 during modulation. λ is the wavelength of the to-be-modulated electromagnetic wave. For example, when q=10, (t₁₀₇+tₚ)>λ/10.

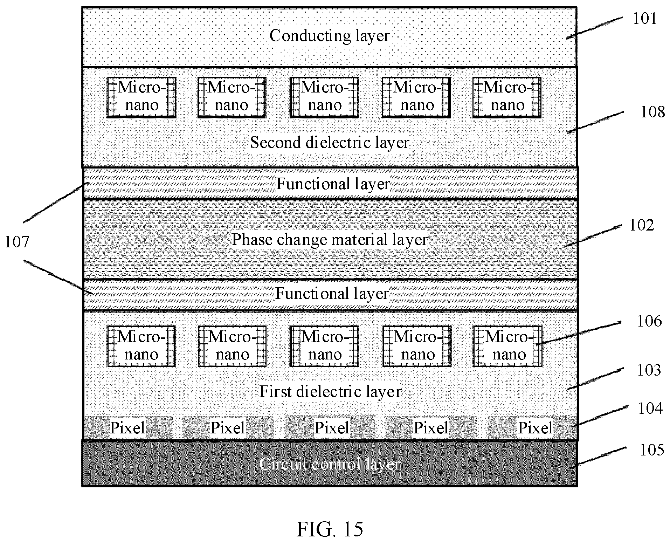

It should be further noted that, in some other implementations of this application, if the functional layer 107 is located on the upper surface of the phase change material layer 102 (as shown in the sub-diagrams FIG. 14(a) and FIG. 14(c)), the SLM may further include a second dielectric layer 108, and the second dielectric layer 108 also includes a micro-nano structure similar to that of the first dielectric layer 103. For a relationship between the second dielectric layer 108 and the micro-nano structure included in the second dielectric layer 108, refer to the foregoing relationship between the first dielectric layer 103 and the micro-nano structure included in the first dielectric layer 103. Details are not described herein again. Specifically, refer to FIG. 15. The second dielectric layer 108 is located between the functional layer 107 and the conducting layer 101, and is configured to isolate the functional layer 107 from the conducting layer 101, so as to increase an amplitude and/or a phase of a modulated electromagnetic wave. It should also be noted that FIG. 15 shows the second dielectric layer 108 added based on the sub-diagram FIG. 14(c). FIG. 15 is merely an example. In actual application, the second dielectric layer 108 may alternatively be added based on the sub-diagram FIG. 14(a), or the functional layer 107 and the second dielectric layer 108 may be added on the upper surface of the phase change material layer 102 based on FIG. 2, FIG. 3, FIG. 4, or FIG. 12. Details are not described herein.

In conclusion, in embodiments of this application, a combination of the first dielectric layer 103 including the micro-nano structure 106 and the functional layer 107 is used, so that a property of the upper phase change material layer is not changed due to a structure change of the lower micro-nano structure. For example, a surface topology generated in the liquid crystal and the micro-nano structure affects a direction and distribution of surface liquid crystal molecules, and optimization needs to be performed accordingly. In this application, a case in which the micro-nano structure 106 is partially or completely buried is not affected. In this way, the micro-nano structure array shown in FIG. 6 to FIG. 11 and distribution thereof can be used to implement a special function and effect.

In an application scenario of this application, a high-performance phase-type SLM can improve performance through improvement in this application, can be used as a graphic generator during display to improve display quality and a refresh rate, and can be used in another scenario in which an insertion loss is sensitive and an increase in a modulation speed can bring a gain, for example, used in a switching engine for optical switching in optical communication. In addition, a most critical scenario corresponding to this application is an optical switching scenario on a backbone optical network, and a core component of optical switching on the backbone network is a WSS. Through analysis, the improved high-performance phase-type SLM can greatly reduce the insertion loss, improve a switching speed, and provide an important input for future large-port optical switching. In addition, further improvement can also develop a new application scenario.

The foregoing descriptions are merely specific implementations of this application. However, the protection scope of this application is not limited thereto. Any change or replacement readily figured out by a person skilled in the art within the technical scope disclosed in this application shall fall within the protection scope of this application.

## Claims

1. A spatial light modulator, sequentially comprising a conducting layer, a phase change material layer, a first dielectric layer, a pixel layer, and a circuit control layer in a first direction, wherein the first dielectric layer comprises a micro-nano structure, wherein
the conducting layer is configured to modulate a phase or an amplitude of a to-be-modulated electromagnetic wave;
the phase change material layer is configured to perform reversible transformation between different phase states;
an amount of absorbing the to-be-modulated electromagnetic wave by the first dielectric layer is less than a first threshold, the first dielectric layer is configured to isolate the pixel layer from the phase change material layer, a refractive index of the micro-nano structure is greater than a second threshold, and the micro-nano structure is configured to reflect the to-be-modulated electromagnetic wave;
the pixel layer comprises a plurality of pixels, wherein each pixel is configured to independently control an optical property of an electromagnetic wave interacting with the pixel; and
the circuit control layer is configured to independently control each pixel.

2. The spatial light modulator according to claim 1, wherein that the first dielectric layer comprises a micro-nano structure comprises:
the micro-nano structure is completely located inside the first dielectric layer.

3. The spatial light modulator according to claim 1, wherein that the first dielectric layer comprises a micro-nano structure comprises:
a part of the micro-nano structure is located inside the first dielectric layer, and an upper surface of the micro-nano structure is a first height higher than an upper surface of the first dielectric layer.

4. The spatial light modulator according to claim 3, wherein
the first height is less than 1/n of a thickness of the micro-nano structure, n≥2, and the thickness of the micro-nano structure is a distance between the upper surface of the micro-nano structure and a lower surface of the micro-nano structure.

5. The spatial light modulator according to any one of claims 1 to 4, wherein
the thickness of the micro-nano structure is less than 1/m of a wavelength of the to-be-modulated electromagnetic wave, m≥2, and the thickness of the micro-nano structure is the distance between the upper surface of the micro-nano structure and the lower surface of the micro-nano structure.

6. The spatial light modulator according to any one of claims 1 to 5, wherein
a difference between a refractive index of the first dielectric layer and the refractive index of the micro-nano structure is greater than 1.

7. The spatial light modulator according to any one of claims 1 to 6, wherein a size of the micro-nano structure belongs to a sub-wavelength scale, and the micro-nano structure comprises at least any one of the following:
a one-dimensional periodic structure and a two-dimensional grid structure, wherein the grid structure is periodically distributed along each dimension.

8. The spatial light modulator according to claim 7, wherein
the micro-nano structure is the one-dimensional periodic structure, and a period of the periodic structure is less than the wavelength of the to-be-modulated electromagnetic wave.

9. The spatial light modulator according to claim 7, wherein
the micro-nano structure is the two-dimensional grid structure, and a period of the grid structure along each dimension is less than the wavelength of the to-be-modulated electromagnetic wave.

10. The spatial light modulator according to any one of claims 1 to 9, wherein
the conducting layer comprises an electrode layer, and the electrode layer is configured to cooperate with the circuit control layer to apply an electrical signal to the spatial light modulator, to modulate the phase or the amplitude of the to-be-modulated electromagnetic wave.

11. The spatial light modulator according to claim 10, wherein
an upper surface of the electrode layer further comprises a dielectric reflection layer, and the dielectric reflection layer comprises k layers of dielectric films, and is configured to modulate the phase or the amplitude of the to-be-modulated electromagnetic wave, wherein k≥1.

12. The spatial light modulator according to claim 11, wherein
a thickness of each of the k layers of dielectric films is less than the wavelength of the to-be-modulated electromagnetic wave.

13. The spatial light modulator according to claim 11 or 12, wherein
when k≥2, values of refractive indices of adj acent dielectric films in the k layers of dielectric films are different.

14. The spatial light modulator according to any one of claims 1 to 13, wherein the spatial light modulator further comprises a functional layer; and
the functional layer is located on an upper surface and/or a lower surface of the phase change material layer, and is configured to regulate alignment of the phase change material layer.

15. The spatial light modulator according to claim 14, wherein
when the functional layer is located on the lower surface of the phase change material layer and the micro-nano structure is completely located inside the first dielectric layer, a sum of a thickness of the functional layer and a first distance of the micro-nano structure is greater than 1/q of the wavelength of the to-be-modulated electromagnetic wave, wherein the thickness of the functional layer is a distance between an upper surface of the functional layer and a lower surface of the functional layer, the first distance is a distance between the upper surface of the micro-nano structure and the upper surface of the first dielectric layer, and q≥10.

16. The spatial light modulator according to claim 14, wherein
when the functional layer is located on the upper surface of the phase change material layer, the spatial light modulator further comprises a second dielectric layer, wherein the second dielectric layer comprises the micro-nano structure; and
the second dielectric layer is located between the functional layer and the conducting layer, and is configured to isolate the functional layer from the conducting layer.

17. The spatial light modulator according to any one of claims 1 to 16, wherein the phase change material layer comprises:
a liquid crystal layer.

18. The spatial light modulator according to any one of claims 1 to 17, wherein
an upper surface of the conducting layer further comprises a substrate, and the substrate is configured to package the spatial light modulator.
